# EUROPÄISCHE PATENTSCHRIFT

(11) **EP 2 125 323 B1**
(45) Veröffentlichungstag und Bekanntmachung des Hinweises auf die Patenterteilung: **19.08.2015**
(21) Anmeldenummer: 08709143.5
(22) Anmeldetag: 21.02.2008
(51) Int. Cl.: B29C 44/46

(54) **VERFAHREN ZUR HERSTELLUNG VON VERBUNDKÖRPERN AUF DER BASIS VON SCHAUMSTOFFEN AUF ISOCYANATBASIS**
METHOD FOR PRODUCING COMPOSITE ELEMENTS ON THE BASIS OF FOAMED MATERIAL BASED ON ISOCYANATE
PROCÉDÉ DE FABRICATION D'ÉLÉMENTS COMPOSITES SUR LA BASE DE MOUSSES À BASE D'ISOCYANATE

(30) Priorität: 28.02.2007 EP 07103221
(43) Veröffentlichungstag der Anmeldung: 02.12.2009
(73) Patentinhaber: BASF SE, 67056 Ludwigshafen (DE)
(72) Erfinder: GERAEDTS, Martin, 49448 Quernheim (DE); CLAMOR, Oliver, 32351 Stemwede-Dielingen (DE); KAMPF, Gunnar, 32351 Stemwede-Haldem (DE); FABISIAK, Roland, 49448 Brockum (DE); HENSIEK, Rainer, 49328 Melle (DE); BALBO-BLOCK, Marco, 22043 Hamburg (DE); TOMASI, Gianpaolo, 49356 Diepholz (DE); ILLICHMANN, Werner, 49448 Lemförde (DE)
(86) Internationale Anmeldenummer: PCT/EP2008/052098
(87) Internationale Veröffentlichungsnummer: WO 2008/104492

(56) Entgegenhaltungen:
- EP-A2- 0 770 466
- WO-A-2005/011950
- WO-A-2005/087386
- WO-A-2006/029786
- DE-A1- 19 757 678
- JP-A- 2006 142 125
- US-A- 4 201 321
- US-A- 4 945 854
- US-A- 5 264 036

## Beschreibung

Die Erfindung betrifft ein Verfahren zur Herstellung von Verbundelementen aus mindestens einer Deckschicht und einem schaumbildenden Reaktionsgemisch, welches über eine stehende Harke auf die untere Deckschicht aufgetragen wird.

Die Herstellung von Verbundelementen aus insbesondere metallischen Deckschichten und einem Kern aus Schaumstoffen auf Isocyanatbasis, zumeist Polyurethan-(PUR) oder Polyisocyanurat-(PIR) Schaumstoffen, häufig auch als Sandwichelemente bezeichnet, auf kontinuierlich arbeitenden Doppelbandanlagen wird gegenwärtig in großem Umfang praktiziert. Neben Sandwichelementen zur Kühlhausisolierung gewinnen Elemente zur Gestaltung von Fassaden verschiedenster Gebäude immer mehr an Bedeutung. Als Deckschichten werden dabei neben beschichteten Stahlblechen auch Edelstahl-, Kupferoder Aluminiumbleche eingesetzt. Insbesondere bei den Fassadenelementen spielt die Oberflächenstruktur der Schaumgrenze zur Deckschicht eine entscheidende Rolle. Aus verschiedensten Gründen kommt es bei der Herstellung der Sandwichelemente oftmals zu unerwünschten Lufteinschlüssen zwischen der unteren Deckschicht und dem Schaumstoff auf Isocyanatbasis, sogenannten Lunkern. Diese Lufteinschlüsse zwischen Blech und Schaumstoff können besonders bei starken Temperaturwechseln und dunklen Farbtönen der Deckschicht in der Anwendung als Fassadenelement zu Ausbeulungen des Bleches führen und die Fassade unansehnlich machen.

Weiterhin wird die Haftung zwischen Isolierschaum und unterer Deckschicht vermindert. Oftmals ist es so, dass bei Sandwichelementen die untere Deckschicht die schlechteste Haftung, bestimmt beim Zugversuch, aufweist. Weiterhin ist bei den üblichen mittels Sandwichelementen erstellten Konstruktionen die Blechunterseite die Außenseite der Fassade, sodass sie extremen Bedingungen wie Temperatur und Sogwirkungen ausgesetzt ist und deswegen stärker belastet wird als die Oberseite des Sandwichelementes, was zur Schaumablösung vom Blech und somit ebenfalls zu Ausbeulungen führen kann.

Demzufolge ist es erforderlich, ein Verfahren zu finden, welches die Lunkerbildung an der Oberfläche der Hartschaumstoffe auf Isocyanatbasis nachhaltig minimiert oder ganz vermeidet und auch bei widrigen äußeren Umständen des Produktionsverfahrens funktioniert. Das Verfahren soll kontinuierlich oder diskontinuierlich eingesetzt werden können. Eine diskontinuierliche Arbeitsweise kann zum Beispiel bei Anfahrvorgängen des Doppelbandes und bei mittels diskontinuierlich arbeitenden Pressen hergestellten Verbundelementen in Frage kommen. Eine kontinuierliche Anwendung erfolgt beim Einsatz von Doppelbandanlagen, wie offenbart in WO 2005/011950 A2.

Das Reaktionsgemisch wird beim Doppelbandverfahren nach dem Stand der Technik maschinell mit Hoch- oder Niederdrucktechnik hergestellt und mittels oszillierenden Gießharken auf die untere Deckschicht aufgetragen. Dabei steht die Harke in Bandlaufrichtung und oszilliert über die Elementbreite. Nachteilig dieser Auftragungsart ist, dass die Lunkerbildung auf der Oberseite ist nicht vollständig zu vermeiden ist, da immer auftragsbedingt Luftblasen in dem Reaktionsgemisch entstehen. Dieser Nachteil ist umso deutlicher je geringer die Zeit zwischen dem Reaktionsgemischauftrag und dem Start der Schäumreaktion ist. Die Geschwindigkeit des kontinuierlich arbeitenden Doppelbandes wird durch die maximal mögliche Oszillationsgeschwindigkeit des Mischkopfes begrenzt. Zusätzlich wirkt sich nachteilig aus, dass mit zunehmender Oszillation mehr Reaktionsgemisch im Randbereich und weniger im Mittenbereich der Deckschicht aufgetragen wird.

Im alternativen Schnellläuferverfahren wird das Reaktionsgemisch über einen Mehrfingerauftrag auf die untere Deckschicht aufgebracht, wobei ebenfalls Luftblasen im Reaktionsgemisch eingeschlossen werden und sich somit ebenfalls nur Lunker behaftete Oberflächen herstellen lassen. Zusätzlich muss das Reaktionsgemisch bei dieser Art des Auftrags über größere Bereiche seitlich "verfließen, so dass vor allem in den äußersten Bereichen, bevor die einzelnen Stränge des Mehrfingerauftrags ineinander laufen, größere Lunkerzonen auf der unteren und oberen Deckschicht entstehen. Weiterhin ist in dem Bereich, in welchem die Stränge des Mehrfingerauftrags ineinander fließen, häufig eine Riefe, zumindest jedoch eine Schaumstörung zu erkennen.

Zur Behebung dieser Mängel wird in DE 197 41 523 vorschlagen, nach dem Auftrag der flüssigen Reaktionsmischung für den Hartschaumstoff auf die Deckschicht die noch fließfähige Schaummischung mit Blasluft zu beaufschlagen. Dadurch soll die Oberfläche der Reaktionsmischung geglättet und der Einschluss von Luftblasen reduziert werden. Nachteilig ist hierbei zum einen, dass die Beaufschlagung mit der Luft einen zusätzlichen Verfahrensschritt bedeutet. Außerdem kann es durch die Blasluft zur Ausbildung einer Anhäufung der Reaktionsmischung kommen, die ebenfalls eine unregelmäßige Oberfläche hervorruft.

Aufgabe der vorliegenden Erfindung war es nun, ein Auftragsverfahren für ein Rehaktionsgemisch eines Hartschaumstoffes auf Isocyanatbasis, insbesondere ein PUR- oder PIR-System, auf ein horizontales Blech oder eine andere flexible oder starre Deckschicht zu finden, die in horizontaler Richtung kontinuierlich transportiert wird, wie es für die Herstellung von Sandwichelementen mit einem kontinuierlich arbeitenden Doppelband üblich ist. Dabei sollte es zu einer gegenüber dem Stand der Technik verbesserten Oberflächenstruktur des Schaums an der unteren Deckschicht, und insbesondere zu einer Vermeidung von Lunkern, kommen. Weiterhin sollte das Verfahren zu einer besseren Haftung zwischen Deckschicht und Hartschaum führen. Insbesondere sollte die Oberfläche des aufgetragenen Schaums gleichmäßig sein. Das Verfahren sollte vor allem für schnell startende Systeme geeignet sein, wobei die oben aufgeführten Nachteile des Mehrfingerauftrags und des oszillierenden Harken-Auftrags vermieden werden sollten.

Die Aufgabe konnte überraschenderweise gelöst werden, indem das Reaktionsgemisch mittels eines feststehenden, parallel und rechtwinklig zur Bewegungsrichtung zur Deckschicht a) angebrachten, mit Bohrungen versehenen Rohres, im folgenden auch als Gießharke bezeichnet, auf die untere Deckschicht aufgetragen wird.

Gegenstand der Erfindung ist somit ein Verfahren zur Herstellung von Verbundkörpern, bestehend aus mindestens einer Deckschicht a) und einem Hartschaumstoff auf Iso-cyanatbasis b), wobei die Deckschicht a) kontinuierlich bewegt wird und das Ausgangsmaterial für den Hartschaumstoff auf Isocyanatbasis b) auf die Deckschicht aufgebracht wird, wobei der Auftrag des flüssigen Ausgangsmaterials für den Hartschaumstoff auf Isocyanatbasis b) mittels eines feststehenden, parallel und rechtwinklig zur Bewegungsrichtung zur Deckschicht a) angebrachten, mit Bohrungen versehenen Rohres erfolgt, dadurch gekennzeichnet, dass das flüssige Ausgangsmaterial für den Hartschaumstoff auf Isocyanatbasis b) in der Mitte des mit Bohrungen versehenen Rohres zugeführt wird und dass der Durchmesser des mit Bohrungen versehenen Rohres von der Mitte zu den Rändern des Rohres geringer wird. Die Begriffe Löcher und Bohrungen können im folgenden synonym verwendet werden.

Gegenstand der Erfindung ist weiterhin eine Vorrichtung zum Auftrag von Reaktionsgemischen auf eine kontinuierlich beförderte Deckschicht, wobei die Vorrichtung ein feststehendes, parallel und rechtwinklig zur Bewegungsrichtung zur Deckschicht a) angebrachtes, mit Bohrungen versehenes Rohr ist, dadurch gekennzeichnet, dass die Zufuhr für das Reaktionsgemisch in der Mitte sitzt und der Durchmesser des mit Bohrungen versehenen Rohres von der Mitte zu den Rändern des Rohres geringer wird.

Die Gießharke besitzt, wie beschrieben, eine rohrähnliche Form, mit Löchern an der Unterseite, verteilt über die gesamte Harkenlänge, und der Zufuhr des Reaktionsgemisches in der Mitte sitzend.

Die Gießharke hat eine Länge, die weitestgehend der Bandanlagenbreite entspricht und hat einen Rohrdurchmesser von 0,2 bis 5 cm, bevorzugt 0,3 bis 3 cm. Die Anzahl der Löcher entlang der Harke beträgt je nach Harkenlänge 20 bis 200, bevorzugt 40 bis 100. Die Lochdurchmesser liegen im Bereich von 0,5 bis 5 mm, bevorzugt 1 ,0 mm bis 4 mm und Löcherabständen von 5 bis 60 mm, bevorzugt 10 bis 30 mm.

Die Harke ist üblicherweise in einer Höhe zur unteren Deckschicht von 10 bis 30 cm, bevorzugt 15 bis 25 cm, angebracht.

Der Durchmesser des Rohres nimmt von der Mitte zu den Enden des Rohres hin ab.

Weiterhin kann von der Mitte zu den Enden der Harke auch der Durchmesser der Austrittslöcher und/oder der Abstand der Löcher verringert werden. Durch diese Maßnahmen, die allein oder in Kombination miteinander durchgeführt werden, soll die Geschwindigkeit des Reaktionsgemisches im Rohr beziehungsweise bei Austritt durch die Löcher konstant gehalten werden.

Die Länge des Rohres kann gleich der Breite der Deckschicht a) sein. Vorzugsweise ist die Länge des Rohres geringer als die Breite der Deckschicht a), um sicherzustellen, dass die Reaktionsmischung nicht teilweise neben die Deckschicht aufgetragen wird. Dabei ist die Gießharke mittig über der Deckschicht a) angeordnet. Vorzugsweise bedeckt die Gießharke mindestens 70 % der Breite der Deckschicht a). Bei einer Breite der Deckschicht von 1,20 m, wie sie bei Sandwich-Elementen üblich ist, wäre in diesem Fall auf jeder Seite eine Breite von 25 cm nicht von der Gießharke bedeckt. Vorzugsweise bedeckt die Gießharke mindestens 80 % der Breite der Deckschicht a), besonders bevorzugt mindestens 90 %.

Das erfindungsgemäße Verfahren ist geeignet für alle Hartschaumstoffe auf Isocyanat-basis, wie Polyurethan(PU)-Schäume, und Schäume mit Urethan- und Isocyanuratgruppen, im folgenden auch als PUR/PIR-Schäume oder nur als PIR-Schäume bezeichnet. Für viele Anwendungen der nach dem erfindungsgemäßen Verfahren hergestellten Verbundkörper wird als Hartschaumstoff auf Isocyanatbasis bevorzugt ein PIR-Schaum eingesetzt.

Besonders geeignet ist das erfindungsgemäße Verfahren für Schaumstoffe mit einer geringen Startzeit des Systems. Die Startzeit der für das erfindungsgemäße Verfahren eingesetzten Systeme liegt vorzugsweise unter 15s, bevorzugt unter 12s, besonders bevorzugt unter 10s und insbesondere unter 8s bei einer Abbindezeit des Systems von 45 s. Unter Startzeit versteht man die Zeit zwischen dem Mischen der Polyol- und der Isocyantkomponente und dem Start der Urethanreaktion. Unter der Abbindezeit wird die Zeit vom Vermischen der Ausgangskomponenten der Schaumstoffe bis zu dem Zeitpunkt verstanden, an dem das Reaktionsprodukt nicht mehr fließfähig ist. Die Abbindezeit wird je nach produzierter Elementdicke sowie Doppelbandgeschwindigkeit angepasst.

In einer besonderen Ausführungsform des erfindungsgemäßen Verfahrens kann zwischen die Deckschicht a) und den Hartschaumstoff auf Isocyanatbasis b) ein Haftvermittler c) aufgebracht werden. Als Haftvermittler c) können die aus dem Stand der Technik bekannten Haftvermittler eingesetzt werden. Insbesondere werden Polyurethane eingesetzt, wobei sowohl reaktive Ein- als auch reaktive Zwei-Komponenten-Systeme verwendet werden können.

Der Auftrag des Haftvermittlers c) erfolgt in Bewegungsrichtung der Deckschicht a) vor dem mit Bohrungen versehenen Rohr. Der Abstand zwischen dem Aufbringen des Haftvermittlers c) und den Aufbringen der Ausgangskomponenten für den Hartschaumstoff auf Isocyanatbasis b) ist dabei so zu wählen, dass der Haftvermittler c) beim Aufbringen der Ausgangskomponenten für den Hartschaumstoff auf Isocyanatbasis b) noch nicht vollständig ausreagiert ist.

Der Haftvermittler c) kann durch bekannte Verfahren, beispielsweise durch Aufsprühen, auf die Deckschicht aufgebracht werden. Vorzugsweise wird der Haftvermittler c) mittels einer rotierenden flachen Scheibe, die in der Waagerechten oder in einer geringen Abweichung von der Waagerechten von bis zu 15°, vorzugsweise parallel zu der Deckschicht a) angebracht ist, auf die Deckschicht aufgebracht. Die Scheibe kann im einfachsten Falle kreisrund oder elliptisch und eben sein. Vorzugsweise ist die Scheibe gezackt oder sternförmig ausgestaltet, wobei die Spitzen des Sterns nach oben gebogen sein können.

Die Scheibe kann vollkommen flach oder an der Seite nach oben abgerundet oder abgekantet sein. Bevorzugt wird eine an den Seiten nach oben abgerundete oder abge-kantete Scheibe eingesetzt. In die Abkantung werden Löcher eingebracht, um den Austrag des Haftvermittlers c) zu gewährleisten. Durchmesser und Anzahl der Löcher werden so aufeinander abgestimmt, dass ein möglichst gleichmäßiger feinverteilter Auftrag des Haftvermittlers c) auf die unterliegende Deckschicht möglich ist, sämtliches auf die Scheibe aufgebrachtes Material ausgetragen werden kann, und der Wartungsaufwand der Scheibe minimal ist.

In einer Ausführungsform ist die Scheibe kaskadenartig gestaltet. Dabei sind die Kaskaden von der Rotationsachse nach außen hin ansteigend angeordnet. An den Übergängen von einer zur benachbarten Kaskade können Löcher in der Scheibe angebracht sein, so dass ein Teil des Haftvermittlers an diesen Kaskadenübergängen auf die untere Deckschicht ausgetragen werden kann. Solch eine kaskadenartig gestaltete Scheibe sorgt für einen besonders gleichmäßigen Auftrag des Haftvermittlers auf die darunter befindliche Deckschicht. Der Auftrag des Haftvermittlers auf die Scheibe erfolgt möglichst nah an der Rotationsachse. Überraschend wurde dabei gefunden, dass der Haftvermittler besonders gleichmäßig auf die untere Deckschicht verteilt wird, wenn der Auftragspunkt des Haftvermittlers parallel zur Produktionsrichtung exakt vor bzw. hinter der Rotationsachse liegt.

Die Scheibe weist, abhängig von der Breite der Deckschicht, einen Durchmesser zwischen 0,05 bis 0,3 m, bevorzugt 0,1 bis 0,25 m, besonders bevorzugt 0,12 bis 0,22 m bezogen auf die lange Seite, auf. Sie ist in einer Höhe von 0,02 bis 0,2 m, bevorzugt 0,03 bis 0,18 m, besonders bevorzugt 0,03 bis 0,15 m über der zu benetzenden Deckschicht angebracht.

Es kann eine Scheibe mit 2 bis 4, bevorzugt 2 bis 3, besonders bevorzugt 2 Kaskaden eingesetzt werden.

Eine derartige Auftragsvorrichtung für den Haftvermittler c) ist beispielsweise in WO 2006/029786 beschrieben.

Das erfindungsgemäße Verfahren und die beschriebene Vorrichtung sind insbesondere geeignet für Systeme mit physikalischen Treibmitteln, insbesondere Pentanen. Weiterhin ist das erfindungsgemäße Verfahren bevorzugt für die Herstellung von Verbundelementen mit starren Deckschichten geeignet.

Als Deckschicht a) können flexible oder starre, bevorzugt starre Deckschichten, wie Gipskartonplatten, Glasfliese, Aluminiumfolien, Aluminium- Kupfer- oder Stahlbleche, bevorzugt Aluminiumfolien, Aluminium- oder Stahlbleche, besonders bevorzugt Stahlbleche verwendet werden. Die Stahlbleche können beschichtet oder unbeschichtet sein. Die Stahlbleche können vorbehandelt werden, beispielsweise mit Corona-, Lichtbogen-, Plasmabehandlung oder anderen üblichen Methoden.

Die Deckschicht a) wird vorzugsweise mit einer konstanten Geschwindigkeit von 1 bis 60 m/min, bevorzugt 2 bis 150 m/min, besonders bevorzugt 2,5 bis 30 m/min und insbesondere 2,5 bis 20 m/min transportiert. Dabei befindet sich die Deckschicht zumindest ab dem Auftrag des Schaumsystems b), vorzugsweise während der gesamten Zeitdauer ab dem Aufbringen des Haftvermittlers c) in einer waagerechten Position.

Beim erfindungsgemäßen Verfahren werden dabei bei der Verwendung von Blechen und Folien als Deckschichten nacheinander die Deckschichten von einer Rolle abgecoilt, gegebenenfalls profiliert, erwärmt, gegebenenfalls vorbehandelt, um die Beschäumbarkeit mit Polyurethan zu erhöhen, optional der Haftvermittler aufgetragen, mit dem Ausgangsmaterial für den Hartschaumstoff auf Isocyanatbasis b) mittels der erfindungsgemäßen stehenden Harke beschäumt, im Doppelband ausgehärtet und letztlich auf die gewünschte Länge zugeschnitten.

Die für das erfindungsgemäße Verfahren eingesetzten Hartschaumstoffe auf Isocyanatbasis b) werden auf übliche und bekannte Weise durch Umsetzung von Polyisocyanaten mit Verbindungen mit mindestens zwei mit Isocyanatgruppen reaktiven Wasserstoffatomen in Anwesenheit von Treibmitteln, Katalysatoren und üblichen Hilfs- und/oder Zusatzstoffen hergestellt. Zu den eingesetzten Ausgangsstoffen ist im einzelnen folgendes zu sagen.

Als organische Polyisocyanate kommen alle bekannten organischen Di- und Polyisocyanate in Betracht, vorzugsweise aromatische mehrwertige Isocyanate.

Im einzelnen seien beispielhaft genannt 2,4- und 2,6-Toluylen-diisocyanat (TDI) und die entsprechenden Isomerengemische, 4,4'-, 2,4'- und 2,2'-Diphenylmethandiisocyanat (MDI) und die entsprechenden Isomerengemische, Mischungen aus 4,4'-und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenyl-polymethylen-polyisocyanaten (Roh-MDI) und Mischungen aus Roh-MDI und Toluylendiisocyanaten. Die organischen Di- und Polyisocyanate können einzeln oder in Form von Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Uretdion-, Carbamat-, Isocyanurat-, Carbodiimid-, Allophanat- und/oder Urethangruppen enthaltende Di- und/oder Polyisocyanate. Die modifizierten Polyisocyanate können gegebenenfalls miteinander oder mit unmodifizierten organischen Polyisocyanaten wie z.B. 2,4'-, 4,4'-Diphenylmethandiisocyanat, Roh-MDI, 2,4- und/oder 2,6-Toluylen-diisocyanat gemischt werden.

Daneben können auch Umsetzungsprodukte von mehrwertigen Isocyanaten mit mehrwertigen Polyolen, sowie deren Mischungen mit anderen Di- und Polyisocyanaten Verwendung finden.

Besonders bewährt hat sich als organisches Polyisocyanat Roh-MDI, insbesondere mit einem NCO-Gehalt von 29 bis 33 Gew.-% und einer Viskosität bei 25°C im Bereich von 150 bis 1000 mPas.

Als Verbindungen mit mindestens zwei gegenüber Isocyanatgruppen reaktiven Wasserstoffatomen kommen solche in Betracht, die mindestens zwei reaktive Gruppen, ausgewählt aus OH-Gruppen, SH-Gruppen, NH-Gruppen, NH₂-Gruppen und CHaciden Gruppen, tragen, bevorzugt OH-Gruppen, und insbesondere Polyetheralkohole und/oder Polyesteralkohole mit OH-Zahlen im Bereich von 25 bis 800 mg KOH/g zum Einsatz.

Die eingesetzten Polyesteralkohole werden zumeist durch Kondensation von mehrfunktionellen Alkoholen, vorzugsweise Diolen, mit 2 bis 12 Kohlenstoffatomen, vorzugsweise 2 bis 6 Kohlenstoffatomen, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure und vorzugsweise Phthalsäure, Isophthalsäure, Terephthalsäure und die isomeren Naphthalindicarbonsäuren, hergestellt.

Die eingesetzten Polyesterole haben zumeist eine Funktionalität von 1,5 - 4.

Insbesondere kommen Polyetherpolyole, die nach bekannten Verfahren, beispielsweise durch anionische Polymerisation von Alkylenoxiden an H-funktionellen Startsubstanzen in Gegenwart von Katalysatoren, vorzugsweise Alkalihydroxiden oder Doppelmetallcyanidkatalysatoren (DMC-Katalysatoren), hergestellt werden, zum Einsatz.

Als Alkylenoxide werden zumeist Ethylenoxid oder Propylenoxid, aber auch Tetrahydrofuran, verschiedene Butylenoxide, Styroloxid, vorzugsweise reines 1,2-Propylenoxid eingesetzt. Die Alkylenoxide können einzeln, alternierend nacheinander oder als Mischungen verwendet werden.

Als Startsubstanzen kommen insbesondere Verbindungen mit mindestens 2, vorzugsweise 2 bis 8 Hydroxylgruppen oder mit mindestens zwei primären Aminogruppen im Molekül zum Einsatz.

Als Startsubstanzen mit mindestens 2, vorzugsweise 2 bis 8 Hydroxylgruppen im Molekül werden vorzugsweise Trimethylolpropan, Glycerin, Pentaerythrit, Zuckerverbindungen wie beispielsweise Glucose, Sorbit, Mannit und Saccharose, mehrwertige Phenole, Resole, wie z.B. oligomere Kondensationsprodukte aus Phenol und Formaldehyd und Mannich-Kondensate aus Phenolen, Formaldehyd und Dialkanolaminen sowie Melamin eingesetzt.

Als Startsubstanzen mit mindestens zwei primären Aminogruppen im Molekül werden vorzugsweise aromatische Di- und/oder Polyamine, beispielsweise Phenylendiamine, 2,3-, 2,4-, 3,4- und 2,6-Toluylendiamin und 4,4'-, 2,4'- und 2,2'-Diaminodiphenylmethan sowie aliphatische Di- und Polyamine, wie Ethylendiamin, eingesetzt.

Die Polyetherpolyole besitzen eine Funktionalität von vorzugsweise 2 bis 8 und Hydroxylzahlen von vorzugsweise 25 mg KOH/g bis 800 mg KOH/g und insbesondere 150 mg KOH/g bis 570 mg KOH/g.

Zu den Verbindungen mit mindestens zwei gegenüber Isocyanat reaktiven Wasserstoffatomen gehören auch die gegebenenfalls mitverwendeten Kettenverlängerer und Vernetzer. Zur Modifizierung der mechanischen Eigenschaften kann sich der Zusatz von difunktionellen Kettenverlängerungsmitteln, tri- und höherfunktionellen Vernetzungsmitteln oder gegebenenfalls auch Gemischen davon als vorteilhaft erweisen. Als Kettenverlängerungs- und/oder Vernetzungsmittel verwendet werden vorzugsweise Alkanolamine und insbesondere Diole und/oder Triole mit Molekulargewichten kleiner als 400, vorzugsweise 60 bis 300.

Kettenverlängerungsmittel, Vernetzungsmittel oder Mischungen davon werden zweckmäßigerweise in einer Menge von 1 bis 20 Gew.-%, vorzugsweise 2 bis 5 Gew.-%, bezogen auf die Polyolkomponente, eingesetzt.

Die Herstellung der Hartschaumstoffe wird üblicherweise in Anwesenheit von Treibmitteln, Katalysatoren, Flammschutzmitteln und Zellstabilisatoren sowie, falls erforderlich weiteren Hilfs- und/oder Zusatzstoffen durchgeführt.

Als Treibmittel können chemische Treibmittel wie Wasser und/oder Ameisensäure verwendet werden, die mit Isocyanatgruppen unter Abspaltung von Kohlendioxid bzw. Kohlendioxid und Kohlenmonoxid reagieren. Bevorzugt können in Kombination mit oder vorzugsweise an Stelle von Wasser auch sogenannte physikalische Treibmittel eingesetzt werden. Dabei handelt es sich um gegenüber den Einsatzkomponenten inerte Verbindungen, die zumeist bei Raumtemperatur flüssig sind und bei den Bedingungen der Urethanreaktion verdampfen. Vorzugsweise liegt der Siedepunkt dieser Verbindungen unter 50°C. Zu den physikalischen Treibmitteln zählen auch Verbindungen, die bei Raumtemperatur gasförmig sind und unter Druck in die Einsatzkomponenten eingebracht bzw. in ihnen gelöst werden, beispielsweise Kohlendioxid, niedrigsiedende Alkane und Fluoralkane.

Die Treibmittel werden zumeist ausgewählt aus der Gruppe, enthaltend Ameisensäure, Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1 bis 3 Kohlenstoffatomen in der Alkylkette, insbesondere Tetramethylsilan.

Beispielhaft seien genannt Propan, n-Butan, iso- und Cyclobutan , n-, iso- und Cyclopentan, Cyclohexan, Dimethylether, Methylethylether, Methylbutylether, Ameisensäuremethylester, Aceton, sowie Fluoralkane, die in der Troposphäre abgebaut werden können und deshalb für die Ozonschicht unschädlich sind, wie Trifluormethan, Difluormethan, 1,1,1,3,3-Pentafluorbutan, 1,1,1,3,3-Pentafluorpropan, 1,1,1,2-Tetrafluorethan, Difluorethan und Heptafluorpropan. Die genannten physikalischen Treibmittel können allein oder in beliebigen Kombinationen untereinander eingesetzt werden.

Besonders bevorzugt als Treibmittelmischung ist eine Mischung aus Ameisensäure, Wasser und Pentan.

Die Treibmittelkomponente wird üblicherweise in einer Menge von 1 bis 45 Gew.-%, bevorzugt 1 bis 30 Gew.-%, besonders bevorzugt 1,5 bis 20 Gew.-% und insbesondere 2 bis 15 Gew.-%, bezogen auf das Gesamtgewicht der Komponenten Polyol, Treibmittel, Katalysatorsystem, und eventuell Schaumstabilisatoren, Flammschutzmittel und sonstigen Zusatzstoffen, eingesetzt.

Die Polyurethan- oder Polyisocyanuratschaumstoffe enthalten, üblicherweise Flammschutzmittel. Vorzugsweise werden bromfreie Flammschutzmittel eingesetzt. Besonders bevorzugt sind Phosphoratome enthaltende Flammschutzmittel, insbesondere werden Trischlorisopropylphosphat, Diethylethanphosphonat, Triethylphosphat und/oder Diphenylkresylphosphat eingesetzt.

Als Katalysatoren werden insbesondere Verbindungen eingesetzt, welche die Reaktion der Isocyanatgruppen mit den mit Isocyanatgruppen reaktiven Gruppen stark beschleunigen. Solche Katalysatoren sind beispielsweise basische Amine, wie sekundäre aliphatische Amine, Imidazole, Amidine, Alkanolamine, Lewissäuren oder metallorganische Verbindungen, insbesondere solche auf Basis von Zinn. Auch Katalysatorsysteme, bestehend aus einer Mischung verschiedener Katalysatoren, können eingesetzt werden.

Falls in den Hartschaumstoff Isocyanuratgruppen eingebaut werden sollen, werden spezielle Katalysatoren benötigt. Als Isocyanurat-Katalysatoren werden üblicherweise Metallcarboxylate, insbesondere Kaliumacetat und dessen Lösungen, eingesetzt. Die Katalysatoren können, je nach Erfordernis, allein oder in beliebigen Mischungen untereinander eingesetzt werden.

Als Hilfsmittel und/oder Zusatzstoffe kommen die für diesen Zweck an sich bekannten Stoffe, beispielsweise oberflächenaktive Substanzen, Schaumstabilisatoren, Zellregler, Füllstoffe, Pigmente, Farbstoffe, Antioxidantien, Hydrolyseschutzmittel, Antistatika, fungistatisch und bakteriostatisch wirkende Mittel zum Einsatz.

Nähere Angaben über die zur Durchführung des erfindungsgemäßen Verfahrens eingesetzten Ausgangsstoffe, Treibmittel, Katalysatoren sowie Hilfs- und/oder Zusatzstoffe finden sich beispielsweise im Kunststoffhandbuch, Band 7, "Polyurethane" Carl-Hanser-Verlag München, 1. Auflage, 1966, 2. Auflage, 1983 und 3. Auflage, 1993.

Zur Herstellung der Hartschaumstoffe auf Isocyanatbasis werden die Polyisocyanate und die Verbindungen mit mindestens zwei mit Isocyanatgruppen reaktiven Wasserstoffatomen in solchen Mengen zur Umsetzung gebracht, dass der Isocyanatindex im Falle der Polyurethan-Schaumstoffe in einem Bereich zwischen 100 und 220, vorzugsweise zwischen 115 und 180, liegt.

Bei der Herstellung von Polyisocyanuratschäumen kann auch mit einem Index von > 180, im allgemeinen 180 bis 700, bevorzugt 200 bis 550, besonders bevorzugt 250 bis 500 und insbesondere 270 bis 400 gearbeitet werden.

Die Polyurethan-Hartschaumstoffe können diskontinuierlich oder kontinuierlich mit Hilfe bekannter Mischvorrichtungen hergestellt werden. Die Vermischung der Ausgangskomponenten kann mit Hilfe bekannter Mischvorrichtungen erfolgen.

Üblicherweise werden die Hartschaumstoffe auf Isocyanatbasis nach dem Zweikomponenten-Verfahren hergestellt. Bei diesem Verfahren werden die Verbindungen mit mindestens zwei gegenüber Isocyanatgruppen reaktiven Wasserstoffatomen mit den Treibmitteln, den Katalysatoren sowie den weiteren Hilfs- und/oder Zusatzstoffen zu einer sogenannten Polyolkomponente vermischt und diese mit den Polyisocyanaten oder Mischungen aus den Polyisocyanaten und gegebenenfalls Treibmitteln, auch als Isocyanatkomponente bezeichnet, zur Umsetzung gebracht.

Die Ausgangskomponenten werden zumeist bei einer Temperatur von 15 bis 35°C, vorzugsweise von 20 bis 30°C gemischt. Das Reaktionsgemisch kann mit Hoch- oder Niederdruckdosiermaschinen vermischt werden.

Die Dichte der eingesetzten Hartschaumstoffe beträgt vorzugsweise 10 bis 400 kg/m3, vorzugsweise 20 bis 200, insbesondere 30 bis 100 kg/m3.

Die Dicke der Verbundelemente liegt üblicherweise im Bereich zwischen 5 bis 250 mm.

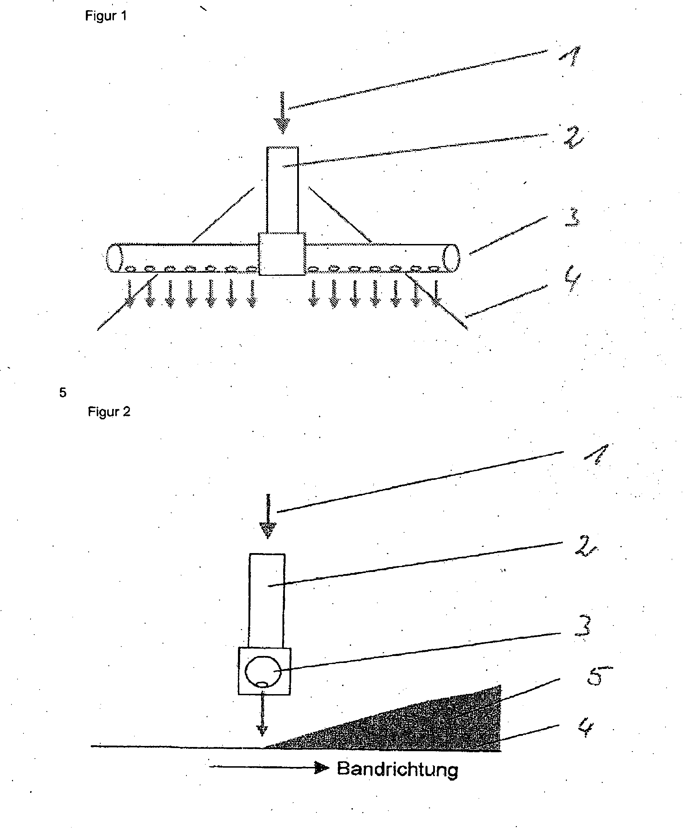

In Figur 1 ist das Rohr zum Auftrag der Hartschaumstoffe von vorn und in Figur 2 von der Seite dargestellt. Dabei bedeutet 1 die Fließrichtung des Reaktionsgemisches, 2 die Zuführvorrichtung des Reationsgemisches, 3 das Auftragsrohr mit den Bohrungen, 4 die untere Deckschicht und 5 die entstehende Schaumschicht auf der unteren Deckschicht.

Die Erfindung soll an den nachfolgenden Beispielen näher beschrieben werden.

### Beispiele:

### A) Zusammensetzung eines PUR-Systems

### Polyol-Komponente (A-Komponente)

| | |
|---|---|
| 44 Teile | Polyetherol 1 bestehend aus Propylenoxid und einem aminischen Starter, Funktionalität 4, Hydroxylzahl 400 mg KOH/g |
| 26 Teile | Polyetherol 2 bestehend aus Propylenoxid und Saccharose als Starter, OHZ 400 mg KOH/g |
| 5 Teile | Polyetherol 3 bestehend aus Propylenoxid und Trimethylolpropan als Starter, OHZ 200 mg KOH/g |
| 20 Teile | Flammschutzmittel 1 Trischlorisopropylphosphat, TCPP |
| 2 Teile | siliconhaltiger Stabilisator |
| 2 Teile | Katalysator 1 aminhaltiger PUR-Katalysator |
| 1 Teil | Katalysator 2 aminhaltiger Treib-Katalysator |

| | |
|---|---|
| Treibmittel 1 | n-Pentan |
| Treibmittel 2 | Wasser |
| Treibmittel 3 | wässrige Ameisensäure, 85%-ig |

### Isocyanat-Komponente (B-Komponente)

Isocyanat Lupranat M50, polymeres MDI (BASF AG), NCO-Gehalt 31%, Viskosität 500 mPas bei 25 °C.

A-, B-Komponente und Treibmittel wurden in solchen Verhältnissen zur Reaktion gebracht das die Kennzahl im Bereich 130 lag und eine Rohdichte von 39 g/L erreicht wurde.

### B) Zusammensetzung eines PIR-Systems

### Polyol-Komponente (A-Komponente)

| | |
|---|---|
| 66 Teile | Polyesterol 1 bestehend aus Phthalsäureanhydrid, Diethylenglycol und Ölsäure, Funktionalität 1,8, Hydroxylzahl 200 mg KOH/g |
| 30 Teile | Flammschutzmittel 1 Trischlorisopropylphosphat, TCPP |
| 1,5 Teile | Stabilisator 1 siliconhaltiger Stabilisator |
| 1,5 Teile | Katalysator 1 PIR-Katalysator, Salz einer Carbonsäure |
| 1 Teil | Katalysator 2 aminhaltiger PUR-Katalysator |

| | |
|---|---|
| Treibmittel 1 | n-Pentan |
| Treibmittel 2 | Wasser |
| Treibmittel 3 | wässrige Ameisensäure, 85%-ig |

### Isocyanat-Komponente (B-Komponente)

Isocyanat Lupranat M50, polymeres MDI (BASF AG), NCO-Gehalt 31%, Viskosität 500 mPas bei 25 °C.

A-, B-Komponente und Treibmittel wurden in solchen Verhältnissen miteinander vermischt, dass die Kennzahl im Bereich 350 lag und eine Rohdichte von 43 g/L erreicht wurde.

Das Polyurethan- bzw. Polyisocyanurat-System b) wurde nacheinander mittels einer oszillierenden Gießharke und einer stehender Gießharke aufgetragen.

Die oszillierende Gießharke hatte die Dimensionen 25 cm x 1,5 cm, besaß 41 Löcher mit einem Durchmesser von 1,6 mm und einem Lochabstand von 5 mm und osziliierte mit einer Geschwindigkeit von 2,8 m/s über eine Strecke von 1,0 m.

Die stehende Harke hatte die Dimensionen 100 cm x 1,5 cm, besaß 90 Löcher mit einem Durchmesser von 1,6 mm und einem Lochabstand von 11 mm.

### Die Auftragsleistung betrug bei beiden Harkensystemen 16,1 kg/min.

Die metallische Deckschicht wurde nicht corona-behandelt. Das Doppelband hatte eine Breite von 1,2 m und wurde mit einer konstanten Geschwindigkeit von 5,5 m/min vorangetrieben. Die Temperatur des Bleches betrug 37 °C, die des Doppelbandes wurde eingestellt auf 40 °C (PUR) bzw. 60°C (PIR). Die Sandwichelementstärke betrug 60 mm.

Nach Aushärtung des Systems wurden Prüfkörper der Abmessung 100x100x5 mm gesägt und die Haftung des Schaums zur Deckschicht nach DIN EN ISO 527-1 / DIN 53292 bestimmt.

Die Häufigkeit der von Oberflächendefekten wurde durch eine optische Methode quantitativ bestimmt. Dafür wurde in einem Abstand von einem Millimeter zur unteren Deckschicht, dass heißt der Deckschicht, auf der die Polyurethan-Reaktionslösung im Doppelbandverfahren aufgetragen wurde, eine Ebene in eine Schaumprobe gelegt und überstehendes Material abgetrennt. Die so erhaltene Schaumoberfläche wurde in einem Öffnungswinkel von 5° beleuchtet und die Fläche des Schattenwurfs durch Oberflächendefekte ins Verhältnis mit der gesamten Oberfläche gesetzt. Dazu wurde die beleuchtete Schaumoberfläche fotografiert und die Schaumbilder anschließend binarisiert. Die integrierte Fläche der schwarzen Bereiche der Binärbilder wurde in Relation zu der Gesamtfläche der Bilder gesetzt und stell somit ein Maß für die Häufigkeit von Oberflächendefekten dar. Des weiteren erfolgte eine zusätzliche qualitative Beurteilung der Oberflächenbeschaffenheit der Schäume, wobei die Deckschicht von einer 1 m x 2 m großen Schaumprobe entfernt wurde und die Oberfläche optisch beurteilt wurde.

Die verschiedenen Versuche mit unterschiedlichen Hartschaumsystemen mit oszillierender sowie stehender Gießharke sind in Tabelle 1 gegenüber gestellt.

**Tabelle 1. Versuchsparameter, und Ergebnisse. Beurteilt wird dabei die Gleichmäßigkeit des Auftrags über die Oberfläche der Deckschicht.**

| Vers.-Nr. | Schaumsystem | Harkensystem | Druckfestigkeit [N/mm²] | Zugfestigkeit [N/mm²] | Haftung [N/mm²] | Auftragsbild | Lunkeranzahl /OF-Störung |
|---|---|---|---|---|---|---|---|
| 1 (V) | PUR | oszill. | 0,114 | 0,14 | | Riefenmuster | 12 % |
| 2 | PUR | stehend | 0,117 | 0,16 | | Eben und musterfrei | 2 % |
| 3 (V) | PIR | oszill. | | | | Riefenmuster | 10 % |
| 4 | PIR | stehend | | | | Eben und musterfrei | 1 % |

| | | | | | | | |
|---|---|---|---|---|---|---|---|
| V - Vergleichsbeispiel | | | | | | | |

Die Ergebnisse in Tabelle 1 zeigen, dass die Häufigkeit der Ausbildung von Oberflächendefekten an der Grenzfläche zu metallischen Deckschichten durch den Einsatz der stehenden Gießharke im Vergleich zum Stand der Technik deutlich verringert und die mechanischen Eigenschaften des Schaums sowie die Haftung zwischen Hartschaum und Deckschicht verbessert wird.

## Patentansprüche

1. Verfahren zur Herstellung von Verbundkörpern, bestehend aus mindestens einer Deckschicht a) und einem Hartschaumstoff auf Isocyanatbasis b), wobei die Deckschicht a) kontinuierlich bewegt wird und das Ausgangsmaterial für den Hartschaumstoff auf Isocyanatbasis b) auf die Deckschicht aufgebracht wird, wobei der Auftrag des flüssigen Ausgangsmaterials für den Hartschaumstoff auf Isocyanatbasis b) mittels eines feststehenden, parallel und rechtwinklig zur Bewegungsrichtung zur Deckschicht a) angebrachten, mit Bohrungen versehenen Rohres erfolgt, **dadurch gekennzeichnet, dass** das flüssige Ausgangsmaterial für den Hartschaumstoff auf Isocyanatbasis b) in der Mitte des mit Bohrungen versehenen Rohres zugeführt wird und dass der Durchmesser des mit Bohrungen versehenen Rohres von der Mitte zu den Rändern des Rohres geringer wird.

2. Verfahren nach Anspruch 1, **dadurch gekennzeichnet, dass** die Breite des mit Bohrungen versehenen Rohres mindestens 70 % der Breite der Deckschicht a) entspricht, wobei das mit Bohrungen versehene Rohr so angeordnet ist, dass an den Rändern der Deckschicht je ein gleich breiter Bereich nicht von dem Rohr bedeckt ist.

3. Verfahren nach Anspruch 1, **dadurch gekennzeichnet, dass** das mit Bohrungen versehene Rohr in einer Höhe von 10 bis 30 cm oberhalb der Deckschicht a) angebracht ist.

4. Verfahren nach Anspruch 1, **dadurch gekennzeichnet, dass** der Durchmesser des Rohres 0,2 bis 5 cm beträgt.

5. Verfahren nach Anspruch 1, **dadurch gekennzeichnet, dass** der Durchmesser der Bohrungen 0,5 bis 5 mm beträgt.

6. Verfahren nach Anspruch 1, **dadurch gekennzeichnet, dass** der Abstand der Bohrungen voneinander 5 bis 60 mm beträgt.

7. Verfahren nach Anspruch 1, **dadurch gekennzeichnet, dass** der Durchmesser der Bohrungen von der Mitte zu den Rändern geringer wird.

8. Verfahren nach Anspruch 1, **dadurch gekennzeichnet, dass** der Abstand der Bohrungen von der Mitte zu den Rändern geringer wird.

9. Verfahren nach Anspruch 1, **dadurch gekennzeichnet, dass** der Hartschaumstoff auf Isocyanatbasis b) Isocyanuratgruppen enthält.

10. Verfahren nach Anspruch 1, **dadurch gekennzeichnet, dass** vor dem Auftrag des Ausgangsmaterials für den Hartschaumstoff auf Isocyanatbasis b) ein Haftvermittler c) auf die Deckschicht a) aufgebracht wird.

11. Verfahren nach Anspruch 1, **dadurch gekennzeichnet, dass** als Haftvermittler c) ein reaktives Ein- oder Mehrkomponenten Polyurethansystem eingesetzt wird.

12. Verfahren nach Anspruch 1, **dadurch gekennzeichnet, dass** der Haftvermittler c) mittels einer rotierenden Scheibe, die sich in Bewegungsrichtung der Deckschicht a) vor dem mit Bohrungen versehenen Rohr befindet, auf die Deckschicht aufgebracht wird.

13. Vorrichtung zum Auftrag von Reaktionsgemischen auf eine kontinuierlich beförderte Deckschicht, wobei die Vorrichtung ein feststehendes, parallel und rechtwinklig zur Bewegungsrichtung zur Deckschicht a) angebrachtes, mit Bohrungen versehenes Rohr ist, **dadurch gekennzeichnet, dass** die Zufuhr für das Reaktionsgemisch in der Mitte sitzt und der Durchmesser des mit Bohrungen versehenen Rohres von der Mitte zu den Rändern des Rohres geringer wird.

## Claims

1. A process for producing composite bodies comprising at least one covering layer a) and a rigid foam based on isocyanate b), in which the covering layer a) is moved continuously and the starting material for the rigid foam based on isocyanate b) is applied to the covering layer and the application of the liquid starting material for the rigid foam based on isocyanate b) is effected by means of a fixed tube which is provided with orifices and is arranged parallel to the covering layer a) and at right angles to the direction of movement of the covering layer a), wherein the liquid starting material for the rigid foam based on isocyanate b) is fed in at the middle of the tube provided with orifices and the diameter of the tube provided with orifices decreases from the middle to the ends of the tube.

2. The process according to claim 1, wherein the width of the tube provided with orifices corresponds to at least 70% of the width of the covering layer a), with the tube provided with orifices being arranged so that an equally wide region at each of the margins of the covering layer is not covered by the tube.

3. The process according to claim 1, wherein the tube provided with orifices is located at a height of from 10 to 30 cm above the covering layer a).

4. The process according to claim 1, wherein the diameter of the tube is from 0.2 to 5 cm.

5. The process according to claim 1, wherein the diameter of the orifices is from 0.5 to 5 mm.

6. The process according to claim 1, wherein the distances of the orifices from one another is from 5 to 60 mm.

7. The process according to claim 1, wherein the diameter of the orifices decreases from the middle to the ends.

8. The process according to claim 1, wherein the spacing of the orifices decreases from the middle to the ends.

9. The process according to claim 1, wherein the rigid foam based on isocyanate b) comprises isocyanurate groups.

10. The process according to claim 1, wherein a bonding agent c) is applied to the covering layer a) before application of the starting material for the rigid foam based on isocyanate b).

11. The process according to claim 1, wherein a reactive single-component or multicomponent polyurethane system is used as bonding agent c).

12. The process according to claim 1, wherein the bonding agent c) is applied to the covering layer by means of a rotating disk which is located before the tube provided with orifices in the direction of movement of the covering layer a).

13. An apparatus for applying reaction mixtures to a continuously transported covering layer, in which the apparatus is a fixed tube which is provided with orifices and is arranged parallel to the covering layer a) and at right angles to the direction of movement of the covering layer a), wherein the feed for the reaction mixture is located in the middle and the diameter of the tube provided with orifices decreases from the middle to the ends of the tube.

## Revendications

1. Procédé de fabrication de corps composites, constitués d'au moins une couche supérieure a) et d'une mousse dure à base d'isocyanate b), la couche supérieure a) étant déplacée en continu et le matériau de départ pour la mousse dure à base d'isocyanate b) étant appliqué sur la couche supérieure, l'application du matériau de départ liquide pour la mousse dure à base d'isocyanate b) ayant lieu au moyen d'un tube fixe, disposé en parallèle et à angle droit de la direction de mouvement de la couche supérieure a), muni de trous, **caractérisé en ce que** le matériau de départ liquide pour la mousse dure à base d'isocyanate b) est introduit au milieu du tube muni de trous et **en ce que** le diamètre du tube muni de trous diminue depuis le milieu vers les bords du tube.

2. Procédé selon la revendication 1, **caractérisé en ce que** la largeur du tube muni de trous correspond à au moins 70 % de la largeur de la couche supérieure a), le tube muni de trous étant agencé de sorte qu'une zone de même largeur ne soit pas couverte par le tube au niveau de chacun des bords de la couche supérieure.

3. Procédé selon la revendication 1, **caractérisé en ce que** le tube muni de trous est disposé à une hauteur de 10 à 30 cm au-dessus de la couche supérieure a).

4. Procédé selon la revendication 1, **caractérisé en ce que** le diamètre du tube est de 0,2 à 5 cm.

5. Procédé selon la revendication 1, **caractérisé en ce que** le diamètre des trous est de 0,5 à 5 mm.

6. Procédé selon la revendication 1, **caractérisé en ce que** l'écart des trous les uns des autres est de 5 à 60 mm.

7. Procédé selon la revendication 1, **caractérisé en ce que** le diamètre des trous diminue depuis le milieu vers les bords.

8. Procédé selon la revendication 1, **caractérisé en ce que** l'écart entre les trous diminue depuis le milieu vers les bords.

9. Procédé selon la revendication 1, **caractérisé en ce que** la mousse dure à base d'isocyanate b) contient des groupes isocyanurate.

10. Procédé selon la revendication 1, **caractérisé en ce qu'**un promoteur d'adhésion c) est appliqué sur la couche supérieure a) avant l'application du matériau de départ pour la mousse dure à base d'isocyanate b).

11. Procédé selon la revendication 1, **caractérisé en ce qu'**un système de polyuréthane mono- ou multicomposant réactif est utilisé en tant que promoteur d'adhésion c).

12. Procédé selon la revendication 1, **caractérisé en ce que** le promoteur d'adhésion c) est appliqué sur la couche supérieure au moyen d'un disque rotatif, qui se trouve avant le tube muni de trous dans la direction de déplacement de la couche supérieure a).

13. Dispositif pour l'application de mélanges réactionnels sur une couche supérieure déplacée en continu, le dispositif étant un tube fixe, disposé en parallèle et à angle droit de la direction de déplacement de la couche supérieure a), muni de trous, **caractérisé en ce que** l'entrée pour le mélange réactionnel se trouve au milieu et le diamètre du tube muni de trous diminue depuis le milieu vers les bords du tube.
